# FASCICULE DE BREVET EUROPEEN

(11) **EP 2 617 094 B1**
(45) Date de publication et mention de la délivrance du brevet: **26.06.2019**
(21) Numéro de dépôt: 11758496.1
(22) Date de dépôt: 01.09.2011
(51) Int. Cl.: H01M 10/39, H01M 4/04, H01M 4/62, H01M 4/13, H01M 10/0562

(54) **ACCUMULATEUR AU LITHIUM TOUT SOLIDE ET PROCÉDÉ DE FABRICATION D'UN TEL ACCUMULATEUR**
FESTKÖRPER-LITHIUMBATTERIE UND HERSTELLUNGSVERFAHREN DAFÜR
ALL-SOLID-STATE LITHIUM BATTERY, AND PRODUCTION METHOD THEREFOR

(30) Priorité: 17.09.2010 FR 1003704
(43) Date de publication de la demande: 24.07.2013
(73) Titulaire: Commissariat à l'Énergie Atomique et aux Énergies Alternatives, 75015 Paris (FR)
(72) Inventeur: ROFFAT, Michaël, F-36000 Chateauroux (FR); LE CRAS, Frédéric, F-38470 Vinay (FR)
(74) Mandataire: Talbot, Alexandre
(86) Numéro de dépôt international: PCT/FR2011/000486
(87) Numéro de publication internationale: WO 2012/035211

(56) Documents cités:
- WO-A1-00/70694
- WO-A2-02/061865
- US-A1- 2006 057 463
- AMATUCCI G G ET AL: "Surface treatments of Li1+xMn2-xO4 spinels for improved elevated temperature performance", SOLID STATE IONICS, NORTH HOLLAND PUB. COMPANY. AMSTERDAM; NL, NL, vol. 104, no. 1-2, 1 décembre 1997 (1997-12-01), pages 13-25, XP004126247, ISSN: 0167-2738, DOI: DOI:10.1016/S0167-2738(97)00407-4
- SAKUDA A ET AL: "All-solid-state lithium secondary batteries with oxide-coated LiCoO2 electrode and Li2S-P2S5 electrolyte", JOURNAL OF POWER SOURCES, ELSEVIER SA, CH, vol. 189, no. 1, 1 avril 2009 (2009-04-01) , pages 527-530, XP025982741, ISSN: 0378-7753, DOI: 10.1016/J.JPOWSOUR.2008.10.129 [extrait le 2008-11-13]

## Description

### Domaine technique de l'invention

L'invention concerne un accumulateur au lithium tout solide comportant des première et seconde électrodes séparées par un électrolyte solide.

L'invention concerne également un procédé de fabrication d'un tel accumulateur.

### État de la technique

De nombreux travaux ont été réalisés pour développer des accumulateurs électrochimiques au lithium rechargeables encore appelés "tout solide" fonctionnant à haute température et/ou haute pression. Les accumulateurs au lithium tout solide se présentent sous la forme d'un empilement de couches minces solides, déposées successivement sur un substrat par des techniques conventionnelles de l'industrie de la microélectronique notamment par dépôt physique en phase vapeur ("physical vapor déposition", PVD), dépôt chimique en phase vapeur ("chemical vapor déposition", CVD) et des techniques de lithographie. De tels accumulateurs trouvent des applications, en particulier, dans le domaine nucléaire et l'aérospatial où ils sont soumis à des conditions sévères de haute température et/ou haute pression.

Pour des applications à haute température et/ou haute pression, les matériaux céramiques et vitrocéramiques sont des candidats prometteurs pour constituer l'électrolyte solide d'accumulateurs au lithium tout solide du fait de leur conductivité élevée et de leur grande stabilité à haute température. Parmi les céramiques les plus connues et présentant les conductivités ioniques au lithium les plus élevées, on peut citer la pérovskite de titanate de lanthane et de lithium Li₃ₓLa_{2/3-x 1/3-x}TiO₃ (noté "LLTO"), les matériaux de type super conducteur ionique à base de lithium de structure cristallographique dite NaSICON (Na Super Ionic CONductor).

Néanmoins, des réactions parasites de réductions électrochimiques ont été observées à faibles potentiels de travail entre l'électrolyte solide de ce type et l'électrode négative, créant une conductivité électronique au sein de l'électrolyte solide. Actuellement, l'utilisation de matériaux céramiques et vitrocéramiques dans les accumulateurs au lithium ne peut être fonctionnelle qu'en association avec une électrode négative comportant un potentiel de travail suffisamment élevé pour éviter la réduction électrochimique de l'électrolyte avec l'électrode négative. À titre d'exemple, pour un électrolyte classique en pérovskite LLTO, l'électrode négative doit être formée d'un matériau ayant un potentiel de travail supérieur à 1,8V /Li⁺/Li afin d'éviter la survenance d'une conductivité électronique au sein de l'électrolyte solide. De même, pour un électrolyte classique de type "NaSICON", l'électrode négative doit être formée d'un matériau ayant un potentiel de travail supérieur à un potentiel compris entre 1,8V et 2,4V /Li⁺/Li.

Des recherches ont été effectuées pour s'affranchir de la réduction électrochimique de l'électrolyte solide avec l'électrode négative et se sont orientées vers la modification de l'électrolyte solide lui-même. À titre d'exemple, le document US-A-20080268346 décrit un électrolyte solide constitué par une poudre vitrocéramique et un copolymère formé par un mélange de polyéthylène oxyde et d'autres polymères organiques. Les solutions proposées ne sont cependant pas entièrement satisfaisantes car l'ajout de chaînes carbonées dans l'électrolyte augmente la conductivité électronique de l'électrolyte et induit une baisse notable de la stabilité de l'électrolyte.

Une autre voie alternative a été également proposée et consiste à introduire une couche de protection formant une inter-couche entre l'électrode négative et l'électrolyte solide de type vitrocéramique. Le document US-A-20040131944 divulgue, par exemple, une inter-couche protectrice formée d'un matériau nitruré, par exemple, d'oxynitrure de lithium et de phosphore (en anglais "Lithium phosphorous oxynitride", noté LiPON), Li₃N ou de Cu₃N. L'introduction d'une telle couche affecte cependant les performances électrochimiques des accumulateurs, en particulier en diminuant la conductivité ionique totale qui est alors comprise entre 10⁻⁷ S/cm et 10⁻⁶ S/cm.

WO 02/061865 décrit une méthode de traitement de particules de spinelle d'oxyde mixte de lithium et de manganèse, comportant les étapes suivantes: mélanger lesdites particules avec un sel choisi parmi l'hydroxyde de lithium et le nitrate de lithium (voir rev. 2); chauffer le mélange formé à une température de 350°C à 850°C; refroidir le mélange, de manière à former une couche de protection autour desdites particules de spinelle. Cette électrode est pourtant utilisée dans une batterie de type "button cell" avec électrolyte liquide contenant LiPF6.

SAKUDA A ET AL, dans JOURNAL OF POWER SOURCES, ELSEVIER SA, CH, vol. 189, no. 1, 1 avril 2009 (2009-04-01), pages 527-530, décrit un accumulateur au lithium de type "tout solide" comportant une anode, un électrolyte solide et une cathode; l'anode est une feuille d'Indium, le matériau actif de la cathode consiste en LiCoO2 revêtu d'une couche amorphe de Li2SiO3 , et l'électrolyte est une vitrocéramique de formule 80Li2S.20P2S5. L'accumulateur est construit en laminant la feuille d'indium sur une pellet bi-couche obtenue par la superposition du matériau composite de la cathode et de l'électrolyte.

### Objet de l'invention

L'objet de l'invention a pour but un accumulateur au lithium apte à être utilisé à haute température et/ou haute pression.

L'objet de l'invention a également pour but de fabriquer un accumulateur au lithium tout solide ayant des performances électrochimiques améliorées et stable à haute température et/ou haute pression, en particulier, ayant une tenue en température pouvant aller jusqu'à 900°C.

Un autre objet de l'invention concerne un procédé de fabrication d'un tel accumulateur simple, facile à mettre en oeuvre et peu coûteux.

Selon l'invention, ce but est atteint par un accumulateur au lithium tout solide et son procédé de fabrication selon les revendications indexées.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
- La figure 1 représente, schématiquement et en coupe, un accumulateur au lithium selon un mode de réalisation particulier de l'invention,
- La figure 2 représente, schématiquement et en coupe, un accumulateur au lithium selon un mode de réalisation particulier de l'invention,
- Les figures 3 et 4 représentent, schématiquement et en coupe, une électrode selon un mode de réalisation particulier de l'invention,
- Les figures 5 et 6 représentent les images obtenues par microscopie à force atomique (en anglais "phase atomic force microscopy", noté AFM), respectivement, des première et seconde faces principales d'une électrode TiO₂/LiNO₃ selon l'invention,
- La figure 7 représente un diagramme de diffraction aux rayons X (DRX) réalisé sur une électrode TiO₂/LiNO₃ selon les figures 5 et 6 (courbe A) et un diagramme DRX comparatif de TiO₂ commercial (courbe B).

### Description de modes particuliers de réalisation.

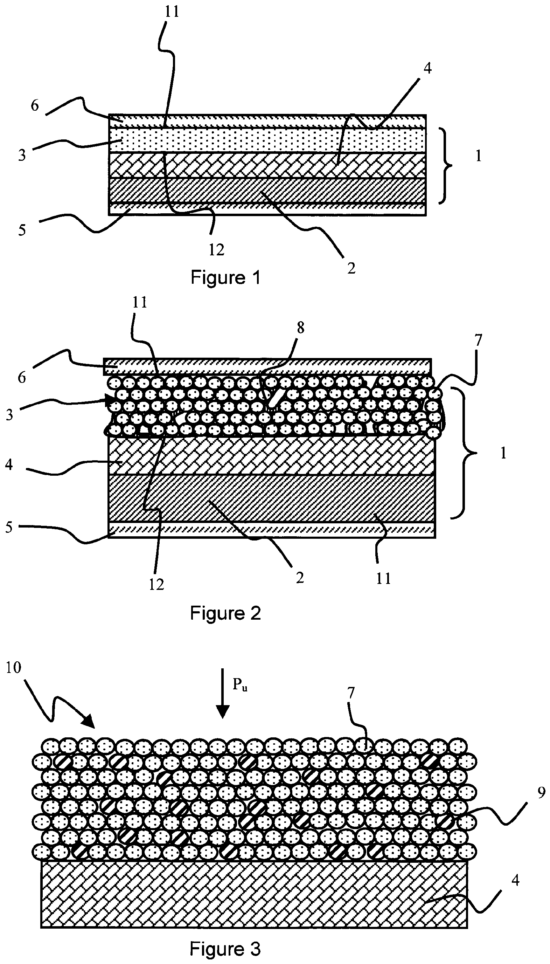

Selon un mode particulier de l'invention représenté à la figure 1, un accumulateur au lithium tout solide comporte un empilement 1 de couches minces solides. L'empilement 1 est formé par des première et seconde électrodes, respectivement 2 et 3, séparées par un électrolyte solide 4.

L'épaisseur des première et seconde électrodes, respectivement 2 et 3, est comprise, de préférence, entre 0,1 µm et 100µm.

L'empilement 1 peut être disposé classiquement entre des premier et second collecteurs de courant, 5 et 6. Les premier et second collecteurs de courant, 5 et 6, sont respectivement en contact avec les première et seconde électrodes, 2 et 3. Les premier et second collecteurs de courant, 5 et 6, sont classiquement métalliques, par exemple, formés par un métal choisi parmi le titane, l'aluminium, le cuivre et le platine ou un alliage de ceux-ci. L'épaisseur des premier et second collecteurs de courant, 5 et 6, est comprise entre 0.1µm et 10µm.

L'électrolyte solide 4 est classiquement formé par une couche de matériau conducteur ionique au lithium ayant une épaisseur, de préférence, comprise entre 100µm et 2000µm, de préférence entre 100µm et 500µm. L'électrolyte solide 4 a, avantageusement, une conductivité ionique totale aux ions lithium, à température ambiante, supérieure ou égale à 10⁻⁵ S/cm, de préférence, supérieure ou égale à 10⁻⁴ S/cm, idéalement, supérieure ou égale à 10⁻³ S/cm.

À titre d'exemple, l'électrolyte solide 4 est un oxyde, éventuellement, dopé avec d'autres matériaux afin d'améliorer la conductivité ionique totale aux ions lithium. L'électrolyte solide 4 est, avantageusement, choisi parmi les céramiques denses, de préférence de compacité supérieure à 95%, et les vitrocéramiques totalement imperméables aux gaz. L'électrolyte solide 4 est, de préférence, choisi parmi les pérovskites ayant une conductivité ionique totale aux ions lithium, à température ambiante, de l'ordre de 10⁻⁵ S/cm à 10⁻⁴ S/cm, les matériaux de type NaSICON ayant une conductivité ionique totale aux ions lithium, à température ambiante, de l'ordre de 10⁻⁴ S/cm à 7.10⁻⁴ S/cm, les vitrocéramiques ayant une conductivité ionique totale aux ions lithium, à température ambiante, de l'ordre de 10⁻³ S/cm ou les oxydes à structure Garnet de conductivité ionique totale de 10⁻⁵ S/cm à 2.10⁻⁴ S/cm.

L'électrolyte solide 4 est, de préférence, choisi parmi :
- les pérovskites de formules Li₃ₓLa_{2/3-x 1/3-x}TiO₃, La_{2/3-x}Sr_{x 1/3-x}LiₓTiO₃ et La_{2/3}Li_{x 1/3-x}Ti₁₋ₓAlₓO₃,
- les NaSICONs de formules Li₁₊ₓMₓN₂₋ₓ(PO₄)₃ et Li_{1+x+y}MₓN₂₋ₓQ_{y}P_{3-y}O₁₂, avec
   M étant choisi parmi Al, Ga, Cr, Sc,
   N étant choisi parmi Ti, Ge, Hf et
   Q étant choisi parmi Si, Se,
- les oxydes céramiques à structure Garnet tels que les oxydes Li₆La₂BaTa₂O₁₂ et Li_{5.5}La₃Nb_{1.75}In_{0.25}O₁₂.

Avantageusement, les première et seconde électrodes 2 et 3, constituent respectivement l'électrode positive et l'électrode négative de l'accumulateur au lithium tout solide.

La première électrode 2 est, de préférence, formée par un matériau électrochimiquement actif d'électrode positive. Le matériau électrochimiquement actif de la première électrode 2 peut être choisi parmi les matériaux d'insertion ou d'intercalation de l'ion lithium, Li⁺, et les oxydes ou les oxydes mixtes contenant éventuellement du lithium. Le matériau électrochimiquement actif de la première électrode 2 peut, par exemple, être choisi parmi LiCoO₂, LiMn₂O₄, LiFePO₄, V₂O₅, WO₃, MnO₂, Li₁₋ₓMn_{2-y}M_{y}O₄, Li₁₋ₓCo_{1-y}M_{y}O₂, Li₁₋ₓNi_{1-x-z}Co_{y}M_{z}O₄, Li₁₋ₓVOPO₄ et LiₓMn_{1-y}M_{y}O₂ avec M étant un élément Mg, Al, Cr ou Co.

Comme représenté à la figure 2, la seconde électrode 3 est formée par un matériau composite comportant un matériau électrochimiquement actif 7 et un matériau amorphe 8 à base de lithium, formant une matrice vitreuse. Le matériau amorphe 8 est un conducteur ionique des ions lithium. Le matériau composite est, de préférence, sous forme de grains en matériau électrochimiquement actif 7 enrobés par le matériau amorphe 8.

On entend par matériau composite un matériau solide hétérogène ayant au moins deux phases dont les qualités respectives se complètent pour former un matériau aux performances globales améliorées.

Le matériau amorphe 8 a une température de fusion inférieure à la température de fusion du matériau électrochimiquement actif 7.

Le matériau amorphe 8 est inerte par rapport au matériau électrochimiquement actif 7, en particulier, dans les conditions de fonctionnement de la seconde électrode 3. Plus précisément, le matériau amorphe 8 ne se réduit pas électrochimiquement avec le matériau électrochimiquement actif 7 dans les conditions de fonctionnement de la seconde électrode 3, en particulier, à haute pression et haute température.

Le rapport matériau électrochimiquement actif 7/ matériau amorphe 8 en pourcentage volumique, noté V_{E}/V_{A}, peut varier entre 99/1 et 20/80. Le rapport V_{E}/V_{A} dépend en partie de la nature des matériaux 7 et 8 et des performances visées.

Le matériau électrochimiquement actif 7 peut être tout matériau électrochimiquement actif connu, utilisé pour former une électrode négative pour accumulateur au lithium. Le matériau électrochimiquement actif 7 est, avantageusement, un matériau d'insertion ou d'intercalation de l'ion lithium, Li⁺.

Le matériau électrochimiquement actif 7 peut être choisi parmi les alliages métalliques, les matériaux carbonés, les nitrures et les oxydes.

Les alliages métalliques sont, par exemple, des alliages LiAI, InSb, Cu₂Sb, Cu₆Sn₅, Li₃Sb, Li₁₃Si₄ et Li₂CuSn ayant des capacités réversibles de l'ordre de 250 mA.h.g⁻¹ à 300 mAh.g⁻¹. Ces alliages métalliques ont un plateau de fonctionnement inférieur à 1.5 V.

Les matériaux carbonés sont, de préférence, des matériaux carbonés ayant des capacités réversibles de l'ordre de 350 mA.h.g⁻¹ à 450 mA.h.g⁻¹, par exemple, le carbone, le graphite, le graphène ou le carbone amorphe.

Les nitrures sont, de préférence, des nitrures ayant des capacités réversibles allant jusqu'à 600 mAh.g⁻¹. Les nitrures sont, par exemple, choisis parmi Fe₃N, Sb₃N, Ni₃N, Co₃N, Li₃FeN₂, Li₇MnN₄ et Li₃₋ₓMₓN avec M étant Co, Ni ou Cu.

Les oxydes sont, de préférence, choisis parmi Li₄Ti₅O₁₂, TiO₂, SnO₂, Cu₂O, MoO₃ et Cr₂O₃. Le plateau de fonctionnement de Li₄Ti₅O₁₂ est, par exemple, situé à 1.55 V avec une capacité réversible entre 100 mA.h.g⁻¹ et 200 mAh.g⁻¹.

Le choix du matériau électrochimiquement actif 7 sera dicté par le plateau de fonctionnement du matériau électrochimiquement actif 7 et les conditions d'utilisation de l'accumulateur au lithium, en particulier, la température de fonctionnement de l'accumulateur au lithium et/ou la pression.

Ainsi, pour un accumulateur au lithium tout solide devant fonctionner à une température de 400°C, on pourra choisir un matériau électrochimiquement actif 7 en alliage métallique LiAI ou InSb dont le plateau de fonctionnement est, respectivement, de l'ordre de 0.2 V et compris entre 0.6V et 0.8 V. En effet, la température de fusion de l'alliage LiAI étant de 700 °C, il est recommandé pour conserver une bonne tenue mécanique d'utiliser l'alliage LiAI à une température de fonctionnement inférieure à 600 °C, idéalement, inférieure ou égale à 550°C. De même, la température de fusion de l'alliage InSb étant de l'ordre de 520°C, l'utilisation de InSb est recommandée à une température de fonctionnement inférieure à 400°C.

Pour une température de fonctionnement supérieure à 900°C, on peut utiliser le graphite comme matériau électrochimiquement actif 7 car sa température de fusion est de 3675 °C et son plateau de fonctionnement compris entre 0.1V et 0.3 V. De même, Cu₂O qui possède une température de fusion de 1244 °C et opère à 1.1 V avec une capacité réversible de l'ordre de 250 mA.h.g⁻¹ est un matériau électrochimiquement actif 7 potentiel à cette température de fonctionnement.

Le matériau amorphe 8 à base de lithium est, de préférence, choisi parmi les halogénures de lithium, les hydrures de lithium, les hydroxydes de lithium, les phosphate de lithium, les borates de lithium, les nitrates de lithium, les sulfates de lithium, les vanadates de lithium, les oxydes de lithium et les oxydes mixtes de lithium.

Alternativement, le matériau amorphe 8 à base de lithium peut comporter au moins un composé au lithium et au moins un composé additionnel.

Le composé au lithium est, de préférence, choisi parmi les halogénures de lithium, les hydrures de lithium, les hydroxydes de lithium, les phosphate de lithium, les borates de lithium, les nitrates de lithium, les sulfates de lithium, les vanadates de lithium, les oxydes de lithium et les oxydes mixtes de lithium.

Le composé additionnel est, de préférence, un sel d'halogénure, avantageusement, choisi parmi les sels KCl, KBr, KI, KF, NaCl, NaBr, Nal et NaF.

Les première et seconde électrodes, 2 et 3, peuvent contenir un ou plusieurs conducteurs électroniques et/ou un ou plusieurs conducteurs ioniques additionnels bien connus de l'homme de l'art. Un conducteur électronique peut être ajouté pour améliorer la conductivité électronique et un conducteur ionique pour améliorer la conductivité ionique, des première et seconde électrodes, 2 et 3.

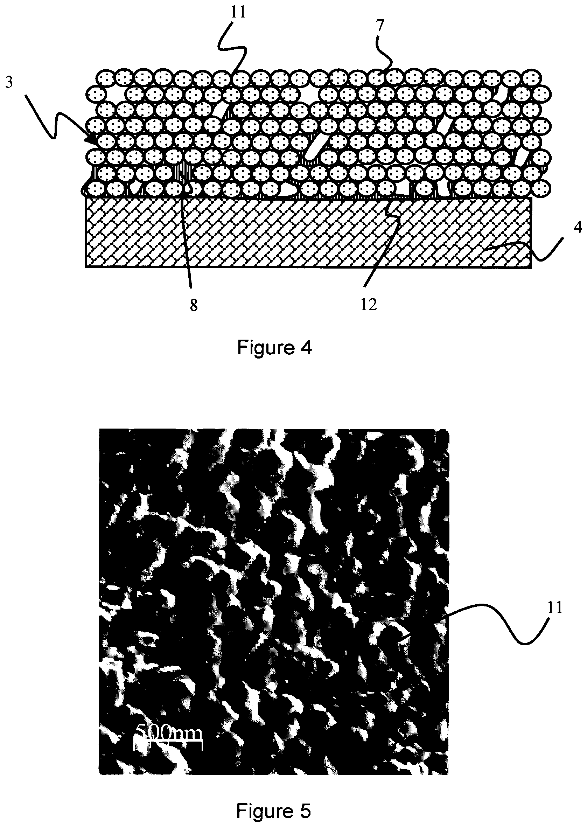

Selon un premier mode particulier de l'invention représenté aux figures 3 et 4, un procédé de fabrication d'un accumulateur au lithium tout solide comporte la réalisation de la seconde électrode 3 à partir du matériau électrochimiquement actif 7 et d'un composé précurseur 9 du matériau amorphe 8.

Le matériau électrochimiquement actif 7 et le composé précurseur 9 sont initialement sous forme de poudres.

En particulier, le composé précurseur 9 se présente sous la forme d'une poudre ayant un diamètre moyen de particules, avantageusement, compris entre 10nm et 10µm. Le composé précurseur 9 est, de préférence, désaggloméré. On entend par désaggloméré, une poudre ne formant pas d'amas et ayant une distribution de taille de particules homogène et fortement localisée.

Le composé précurseur 9 a une température de fusion inférieure à la température de fusion du matériau électrochimiquement actif 7 et est apte à former une matrice amorphe par traitement thermique.

Le composé précurseur 9 du matériau amorphe 8 est un conducteur ionique des ions lithium et est inerte par rapport au matériau électrochimiquement actif 7.

Le composé précurseur 9 comporte au moins un composé au lithium, de préférence, choisi parmi les halogénures de lithium, les hydrures de lithium, les hydroxydes de lithium, les phosphate de lithium, les borates de lithium, les nitrates de lithium, les sulfates de lithium, les vanadates de lithium, les oxydes de lithium et les oxydes mixtes de lithium.

Le composé précurseur 9 peut, éventuellement, comporter ou être constitué par un unique composé au lithium.

Le composé précurseur 9 peut, avantageusement, comporter au moins un composé au lithium, de préférence, choisi parmi les composés listés dans le tableau 1 suivant :

**TABLEAU I**

| **Composé précurseur** | **Température de fusion T_{f} (°C)** |
|---|---|
| LiCl | 605 |
| LiBr | 550 |
| LiI | 446 |
| LiF | 845 |
| LiBH₄ | 275 |
| LiH | 680 |
| LiOH | 470 |
| LiBO₂ | 845 |
| LiPO₃ | 656 |
| LiNO₃ | 264 |
| LiN₃ | 840-850 |
| Li₂SO₄ | 845 |
| LiVO₃ | 620 |
| Li₂MoO₄ | 702 |
| Li₂B₄O₇ | 760-880 |

Alternativement, le composé précurseur 9 à base de lithium peut comporter au moins un composé au lithium et au moins un composé additionnel.

Le composé additionnel est, de préférence, choisi parmi les sels d'halogénure, avantageusement, choisi parmi les sels KCl, KBr, KI, KF, NaCl, NaBr, Nal et NaF.

À titre d'exemple, le composé précurseur 9 à base de lithium peut être choisi parmi les composés listés dans le tableau 2 suivant :

**TABLEAU II**

| **Composé précurseur** | **Rapport molaire %** | **Température de fusion T_{f} (°C)** |
|---|---|---|
| LiCl /KCl | 58,8/41,2 | 354 |
| LiBr / KBr | 60 / 40 | 320 |
| LiI / KI | 63,3 / 36,7 | 285 |
| LiF / LiI | 16,5 / 83,5 | 411 |
| LiBr / LiF | 76 24 | 448 |
| LiCl / Lil | 34,6 / 65,4 | 368 |
| LiF / LiCl | 30,5 / 69,5 | 501 |
| LiF / LiCl / LiBr | 22/31 /47 | 443 |
| LiF / LiBr / KBr | 3,5 / 54,5 / 42 | 320 |
| LiCl / KCl /NaCl | 61,2 / 29,7 / 9,1 | 429 |
| LiCl / KCl /NaCl | 8,5/59/32 | 265 |
| LiF / LiCl /LiBr / Lil | 15,4 / 21,7 / 32,9 / 30 | 360 |
| LiF / LiCl / LiVO₃ / Li₂SO₄ / Li2MoO₄ | 17,4 / 42 / 17,4 / 11,6 / 11,6 | 363 |
| LiF / LiCl / LiVO₃/ Li₂CrO₄ | 7 / 41,5 / 16,4 / 35,1 | 340 |
| LiF / LiCl / LiVO₃/ Li₂MoO₄ | 16,5 / 47 / 28,8 / 7,6 | 387 |
| LiCl / LiBr / LiVO₃ | 18 / 72 / 10 | 464 |
| LiCl / LiBr / Li₂MoO₄ | 27 / 48 / 25 | 444 |

Comme représenté à la figure 3, l'étape de réalisation de la seconde électrode 3 comporte une étape de formation d'un mélange de poudres 10 comportant le matériau électrochimiquement actif 7 et le composé précurseur 9 du matériau amorphe 8.

Selon un mode de réalisation particulier, le mélange de poudres 10 est ensuite mis en forme selon tout procédé connu, pour obtenir une préforme.

L'étape de mise en forme du mélange de poudres 10 peut être réalisée par compression uniaxiale, pour former une préforme, par exemple, en forme de pastille.

Alternativement, l'étape de mise en forme peut être réalisée par compression isostatique à froid ou à chaud.

Comme représenté à la figure 3, le mélange de poudres 10 préformé est ensuite placé sur un support. Le support est, de préférence, l'électrolyte solide 4 de l'accumulateur au lithium tout solide.

Le mélange de poudres 10 préformé a une première face principale 11 libre (en haut à la figure 3) et une seconde face principale 12 opposée à la première face principale 11 libre (en bas à la figure 3).

Le mélange de poudres 10 préformé est disposé sur l'électrolyte solide 4 de manière à ce que la seconde face principale 12 est en contact avec l'électrolyte solide 4.

L'électrolyte solide 4 de l'accumulateur au lithium tout solide est obtenu et mis en forme selon tout procédé connu, préalablement au dépôt du mélange de poudres 10.

À titre d'exemple, un électrolyte solide 4 en céramique est synthétisé sous forme de poudre, par chimie du solide ou par chimie en solutions. Une céramique sous forme de poudre est obtenue après une succession de traitements de broyage, tamisage et de traitements thermiques. La céramique en poudre est ensuite mise en forme, par exemple, par compression de façon uniaxiale ou pressage isostatique à froid ou à chaud, pour augmenter la compacité de l'électrolyte solide 4. Une ultime étape de frittage à haute température permet d'obtenir un électrolyte solide 4 en céramique apte à constituer un support pour la seconde électrode 3.

À titre d'exemple, un électrolyte solide 4 en vitrocéramique est obtenu à partir d'une poudre en céramique, par traitement thermique à une température supérieure à la température de fusion de la céramique. La céramique en fusion est ensuite coulée sur une plaque en acier ou en platine, prétraitée thermiquement entre 100°C et 350 °C. Puis, elle peut être pressée et traitée thermiquement en dessous de sa température de transition vitreuse, pour supprimer les contraintes mécaniques. Un traitement thermique additionnel à haute température est ensuite effectué, pour recristalliser le matériau et former l'électrolyte solide 4 en vitrocéramique conductrice ionique.

Enfin, un polissage de l'électrolyte solide 4 en vitrocéramique ou en céramique est généralement réalisé, pour réduire l'électrolyte solide 4 à une épaisseur souhaitée comprise, par exemple, entre 150µm et 500µm.

Comme représenté à la figure 4, le mélange de poudres 10 sous forme d'une préforme est soumis à un traitement thermique, selon tout procédé connu, par exemple, en plaçant l'ensemble électrolyte solide 4/ préforme 10 dans un four.

La température du traitement thermique est fixée à une température inférieure à la température de fusion du matériau électrochimiquement actif 7 et supérieure à la température de fusion du composé précurseur 9. La rampe en température peut être, classiquement, comprise entre 0,1°C/min et 10°C/min ou bien, on peut utiliser un traitement par RTA (Rapid Thermal Annealing), pour éviter les interactions chimiques entre les espèces.

L'étape de traitement thermique permet ainsi de faire fondre le composé précurseur 9 sans faire fondre le matériau électrochimiquement actif 7.

Comme représenté à la figure 4, le composé précurseur 9 fondu enrobe les particules de matériau électrochimiquement actif 7. En outre, le composé précurseur 9 fondu a tendance à migrer par gravité vers l'électrolyte solide 4, de la première face principale 11 libre vers la seconde face principale 12. Par écoulement du composé précurseur 9 fondu, la concentration en composé précurseur 9 fondu augmente au niveau de la seconde face principale 12 proportionnellement à la durée du traitement thermique et devient plus importante que la concentration en composé précurseur 9 fondu au niveau de la première face principale 11.

Le composé précurseur 9 fondu qui atteint l'électrolyte solide 4 adhère à sa surface. En particulier, lorsque l'électrolyte solide 4 est poreux, le composé précurseur 9 pénètre dans les pores, améliorant l'adhésion et l'interface avec l'électrolyte solide 4.

L'étape de traitement thermique est suivie d'une trempe, de préférence, réalisée à une température inférieure ou égale à la température ambiante.

On entend par le terme "trempe", un traitement thermique qui consiste en un refroidissement rapide d'un matériau pour obtenir des propriétés mécaniques particulières. Cette opération consiste à plonger un matériau chaud dans un fluide plus froid afin de le doter de propriétés nouvelles. Le fluide peut être choisi parmi l'eau, l'huile, un brouillard d'eau ou des gaz, par exemple, de l'air, de l'argon ou de l'azote à température ambiante.

L'étape de trempe permet de figer le composé précurseur 9 fondu et de maintenir sa forme amorphe, pour donner le matériau amorphe 8.

Les étapes de traitement thermique et de trempe permettent de transformer le composé précurseur 9 en matériau amorphe 8 et obtenir ainsi une seconde électrode 3 solide massive et non poreuse.

Par ailleurs, le fait d'utiliser le composé précurseur 9 en fusion diminue les interactions pouvant exister entre le matériau électrochimiquement actif 7 et l'électrolyte solide 4 et améliore ainsi l'adhésion de la seconde électrode 3 avec l'électrolyte solide 4.

Le matériau amorphe 8 ainsi formé constitue une matrice vitreuse pour les particules de matériau électrochimiquement actif 7. La majorité des particules de matériau électrochimiquement actif 7 à l'interface entre le l'électrolyte solide 4 et la seconde face principale 12 est recouverte d'une fine couche de matériau amorphe 8.

Le refroidissement par trempe, avantageusement à une température inférieure ou égale à la température ambiante, permet de maintenir la structure obtenue à l'état fondu à l'issue du traitement thermique et de conserver la gradation en concentration de matériau amorphe 8 résultant de la migration du matériau amorphe 8, de la première face principale 11 vers la seconde face principale 12.

Avantageusement, on obtient une seconde électrode 3 présentant un gradient en concentration de matériau amorphe 8 croissant entre la première face principale 11 et la seconde face principale 12. La gradation en matériau amorphe 8 est croissante de la première face principale 11 vers la seconde face principale 12. Sur la seconde face principale 12, la majorité ou, de préférence, toutes les particules de matériau électrochimiquement actif 7 sont recouvertes de matériau amorphe 8. Sur la première face principale 16, peu ou, de préférence, aucune particule de matériau électrochimiquement actif 7 est recouverte par le matériau amorphe 8. Le rapport volumique V_{E}/V_{A}, matériau électrochimiquement actif 7/ matériau amorphe 8, varie dans le sens de l'épaisseur de la seconde électrode 3, en augmentant de la première face principale 11 à la première face principale 11 (de haut en bas à la figure 4).

L'étape de trempage peut être suivie d'une étape de polissage mécanique de la première face principale 11, selon tout procédé connu, pour réduire l'épaisseur de la seconde électrode 3.

La première électrode 2 peut ensuite être réalisée sur la face libre de l'électrolyte 4, selon tout procédé connu, de manière à ce que l'électrolyte solide 4 est situé entre les première et seconde électrodes, 2 et 3. La première électrode 2 peut, par exemple, être déposée par PVD ou par des techniques classiques de lithographie. La première électrode 2 peut également être réalisée suivant un procédé de réalisation identique à celui de la seconde électrode 3 décrit ci-dessus.

Les collecteurs de courant métalliques, 5 et 6, peuvent ensuite être déposés par pulvérisation cathodique, respectivement, sur les faces libres des première et seconde électrodes, 2 et 3.

Le choix du couple matériau électrochimiquement actif/matériau amorphe dépendra de leurs caractéristiques intrinsèques, notamment, de leur température de fusion ainsi que de leur réactivité l'un par rapport à l'autre. En outre, le choix des matériaux sera fonction de l'application visée, en particulier de la température et/ou pression de fonctionnement, pour une utilisation dans un l'accumulateur au lithium tout solide, haute pression et/ou haute température.

Le pourcentage volumique du matériau amorphe 8 est, avantageusement, choisi de manière à être suffisamment élevé par rapport au pourcentage volumique du matériau électrochimiquement actif 7, pour former une couche mince de matériau amorphe 8 entre les particules de matériau électrochimiquement actif 7 et l'électrolyte solide 4. L'épaisseur moyenne de cette couche mince de matériau amorphe 8 est, avantageusement, comprise entre 1nm et 50nm, de préférence entre 1nm et 10nm. La réduction électrochimique du matériau électrochimiquement actif 7 pendant les cycles de charge et de décharge de l'accumulateur au lithium tout solide est fortement diminuée car les particules de matériau électrochimiquement actif 7 de la seconde électrode 3 ne sont pas en contact direct avec l'électrolyte solide 4. La qualité de l'interface entre l'électrolyte solide 4 et la seconde électrode 3 est ainsi améliorée.

Par ailleurs, la conductivité électronique à travers la seconde électrode 3 peut être affectée lorsque les particules de matériau électrochimiquement actif 7 sont complètement enrobées dans le matériau amorphe 8. Le pourcentage volumique du matériau amorphe 8 est, par conséquent, choisi de manière à être suffisamment faible par rapport au pourcentage volumique du matériau électrochimiquement actif 7 pour que le matériau amorphe 8 enrobe uniquement partiellement les particules de matériau électrochimiquement actif 7.

Dans le mélange de poudres 10, le rapport matériau électrochimiquement actif 7/composé précurseur 9, en pourcentage volumique, noté V_{E}/V_{P}, varie, de préférence, entre 99/1 et 20/80.

Le choix du matériau électrochimiquement actif 7, du composé précurseur 9 ainsi que du rapport volumique V_{E}/V_{P} peut être aisément réalisé et ajusté par l'homme de l'art, pour optimiser les performances visées.

À titre d'exemple, on choisira LiCl, LiBr, Lil, LiF ou des mélanges mixtes de ceux-ci comme composé précurseur 9 en association avec les matériaux électrochimiquement actifs 7 carbonés tels que le graphite ou le carbone vitreux, à la condition qu'ils ne réagissent pas ensemble. Dans ce cas, l'étape de traitement thermique du mélange de poudres 10 est effectuée sous atmosphère inerte, pour éviter la formation de dioxyde de carbone ou de sous-produits. Les températures de fusion de ces composés précurseurs 9, répertoriées dans le tableau 1, sont comprises entre 265 et 845 °C. La température de traitement thermique est fixée en fonction de la température de fusion du composé précurseur 9. Ainsi, une préforme 10 réalisée à partir de graphite (T_{f} = 3675 °C) et de LiF (T_{f} = 845 °C) sera traitée à une température comprise entre la température de fusion de LiF et la température de fusion du graphite, par exemple, entre 850°C et 1000 °C, sous atmosphère d'argon. La seconde électrode 3 en matériau composite graphite/LiF peut avoir un rapport volumique V_{E}/V_{P} compris entre 99/1 et 70/30 avec une répartition homogène du LiF amorphe au sein de la seconde électrode 3. Alternativement, le rapport volumique V_{E}/V_{P} peut varier selon l'épaisseur de la seconde électrode 3. Par exemple, le rapport volumique peut être compris entre 50/50 et 20/80 au niveau de la seconde face principale 12 faisant l'interface avec l'électrolyte solide 4 et peut varier graduellement au sein de la seconde électrode 3 jusqu'à atteindre une valeur V_{E}/V_{P} comprise entre 90/10 et 100/0 au niveau de la première face principale 11. La seconde électrode 3 ainsi formée peut être utilisée dans un accumulateur au lithium tout solide fonctionnant à une température allant 750 °C, de préférence, jusqu'à 700 °C.

À titre d'exemple, le composé au lithium LiNO₃ peut être utilisé avec des oxydes comme Li₄Ti₅O₁₂, TiO₂, SnO₂, Cu₂O, MoO₃ et Cr₂O₃, pour former le mélange de poudres 10, à la condition qu'ils ne réagissent pas ensemble. Toutefois la température du traitement thermique ne peut excéder 400 °C. Ainsi, le traitement thermique est réalisé entre 300 et 380 °C sous air pour faire fondre LiNO₃ et une trempe est ensuite effectuée à température ambiante, pour former le composé amorphe 8 correspondant. La seconde électrode 3 composite obtenue peut être employée dans un accumulateur au lithium tout solide fonctionnant à une température allant jusqu'à 250 °C, de préférence jusqu'à 200 °C.

À titre d'exemple, les composés au lithium Li₃N, LiCl, LiBr, Lil, LiF ou des mélanges de ceux-ci peuvent être utilisés avec des nitrures comme Fe₃N, Sb₃N, Li₃FeN₂, ou Li₇MnN₄ pour former le mélange de poudres 10, à la condition qu'ils ne réagissent pas ensemble. La préforme 10 obtenue, par exemple, à partir de Li₃FeN₂ et Li₃N peut subir un traitement thermique entre 850°C et 1000 °C, sous atmosphère azotée. La seconde électrode 3 composite obtenue peut être utilisée dans un accumulateur au lithium tout solide fonctionnant à une température allant jusqu'à 750 °C, de préférence, jusqu'à 700 °C.

À titre d'exemple, les composés au lithium LiCI, LiBr, Lil, LiF ou des mélanges de ceux-ci peuvent être utilisés avec des alliages métalliques comme LiAI, InSb ou Cu₂Sb pour former le mélange de poudres 10, à la condition qu'ils ne réagissent pas ensemble. La préforme 10 obtenue, par exemple, à partir de LiAI (T_{f}= 700 °C) et Lil (T_{f} = 446 °C) peut subir un traitement thermique entre 450°C et 600 °C sous atmosphère inerte ou atmosphère d'argon. La seconde électrode 3 composite obtenue peut être utilisée dans un accumulateur au lithium tout solide fonctionnant à une température allant jusqu'à 400 °C, de préférence, jusqu'à 350 °C.

Ce premier mode de réalisation particulier est particulièrement adapté pour un mélange de poudres 10 comportant une faible proportion de composé précurseur 9, de préférence, ayant un rapport V_{E}/V_{P} compris entre 99/1 et 80/20, de préférence, entre 97/3 et 90/10.

Selon une variante, un ou plusieurs conducteurs électroniques et/ou conducteurs ioniques et/ou polymères et/ou solvants peuvent être ajoutés dans le mélange de poudres 10, matériau électrochimiquement actif 7/ composé précurseur 9, avant l'étape de traitement thermique, à la condition qu'ils ne réagissent pas entre eux et/ou avec le matériau électrochimiquement actif 7 et/ou avec le composé précurseur 9.

Les conducteurs électroniques peuvent être, par exemple, du carbone, des métaux comme le cuivre, le titane, l'aluminium, des matériaux nobles comme le platine ou l'or ou des chlorures comme PtCl₂ (T_{f} = 581 °C) qui se décomposent au contact de l'hydrogène de l'air, pendant le traitement thermique, formant du chlore volatil et des clusters métalliques de platine.

Les conducteurs ioniques de type électrolyte, par exemple, de fines particules de céramiques ou vitrocéramiques peuvent, avantageusement, être ajoutées au mélange de poudres 10, pour améliorer le passage des ions lithium au sein de la seconde électrode 3.

Les polymères peuvent également être incorporés dans le mélange de poudres 10, notamment, pour faciliter l'écoulement du composé précurseur 9 en fusion et pour améliorer également la porosité de la seconde électrode 3. Les polymères sont, par exemple, choisis parmi le polyoxyde d'éthylène, le polyéthylène, le polypropylène, le polyéthylèneglycol, le polyvinyle butyrale, la polyoléfine, les polyamides, les polyesters, les polyacrylates et les résines fluorées comme le polytétrafluorure d'éthylène, le polychlorotrifluorure d'éthylène et le polyfluorure de vinylidène. Les polymères peuvent, éventuellement, être utilisés dans un solvant ou un tensioactif. Nous pouvons citer, par exemple, les polymères F127 ou P123 de type [H(CH2CH2O)ₙ(CH2CH(CH3)O)ₘ(CH2CH2O)ₙH] avec n/m = 106/70 et n/m = 20/70, commercialisés par la société Sigma-Aldrich.

Enfin, suivant les techniques utilisées pour l'étape de mise en forme du mélange de poudres 10, il peut être avantageux d'ajouter des solvants connus de l'homme de l'art, pour optimiser cette étape, par exemple, de l'eau, un alcool comme l'éthanol ou l'isopropanol, de l'acétone, du toluène, des alcanes, de l'hexane ou du butane.

Selon un second mode de réalisation particulier, le procédé de fabrication de l'accumulateur au lithium tout solide est identique au premier mode de fabrication décrit ci-dessus à l'exception du fait que l'étape de réalisation de la seconde électrode comporte la formation d'une barbotine à partir du mélange de poudres 10 du matériau électrochimiquement actif 7 et du composé précurseur 9, par ajout d'un solvant et, éventuellement, d'un polymère.

L'étape de mise en forme ultérieure consiste alors à déposer la barbotine sur l'électrolyte solide 4 selon tout procédé connu, par exemple, par enduction ou Spin Coating. Après séchage et évaporation du solvant, on réalise le traitement thermique pour faire fondre le composé précurseur 9 et former le matériau amorphe 8.

Comme illustré à la figure 3 par la flèche verticale, après séchage et avant le traitement thermique, une compression uniaxiale peut, éventuellement, être réalisée en exerçant une pression Pᵤ dans une direction unique, perpendiculaire à l'électrolyte solide 4.

Selon un troisième mode de réalisation particulier, l'étape de réalisation de la seconde électrode 3 comporte une étape d'obtention d'un mélange de poudres 10, par mélange du matériau électrochimiquement actif 7 et du composé précurseur 9 du matériau amorphe 8, identique au premier mode de réalisation particulier décrit ci-dessus.

Le mélange de poudres 10 est ensuite traité thermiquement à une température supérieure à la température de fusion du composé précurseur 9 et inférieure à la température de fusion du matériau électrochimiquement actif 7 de manière à faire fondre le composé précurseur 9. Le composé précurseur 9 fondu enrobe les particules solides de matériau électrochimiquement actif 7, pour donner un mélange pâteux contenant le composé précurseur 9 en fusion et les particules solides de matériau électrochimiquement actif 7. Ce mélange est ensuite directement coulé sur l'électrolyte solide 4 qui est, de préférence, chauffé au préalable à une température sensiblement identique à la température de traitement thermique et maintenu à cette température durant la coulée selon une pratique connue de l'homme de l'art, afin d'éviter la survenance de contraintes thermiques. L'ensemble électrolyte solide 4/ mélange est ensuite trempé à température ambiante pour former le matériau amorphe 8.

Ce mode de réalisation particulier est particulièrement adapté pour un mélange de poudres 10 comportant une proportion importante de composé précurseur 9, de préférence, ayant un rapport V_{E}/V_{P} compris entre 80/20 et 20/80.

### Exemple : formation d'une seconde électrode 3 en TiO₂/LiNO₃

500 mg de poudre de dioxyde de titane anatase, TiO₂, (99.8 %) commercialisé par la société Sigma-Aldrich et 33 mg de poudre de nitrate de lithium LiNO₃ (99.99 %) commercialisé par la société Fluka sont mélangés, pour obtenir un mélange de poudres TiO₂/LiNO₃ dans des proportions 90/10 en pourcentage volumique. 0.5 mL d'une solution éthanolique de polyéthylèneglycol (C₄H₉₈O₂₅, noté PEG), à une concentration de 0.1 mol/L, est ajouté au mélange de poudres TiO₂/LiNO₃. L'ensemble est agité dans un mortier puis séché à 110 °C. 100 mg du mélange TiO₂/LiNO₃ ainsi formé sont introduits dans un moule à pastiller de 5 mm de diamètre et pressés uniaxialement à 0.5 tonne pour former une pastille TiO₂/LiNO₃. La pastille TiO₂/LiNO₃ formée est ensuite traitée thermiquement à 380°C pendant 2h et trempée à température ambiante. On obtient une seconde électrode 3 en matériau composite TiO₂/LiNO₃ sous forme d'une pastille ayant des première et seconde faces principales, respectivement 11 et 12.

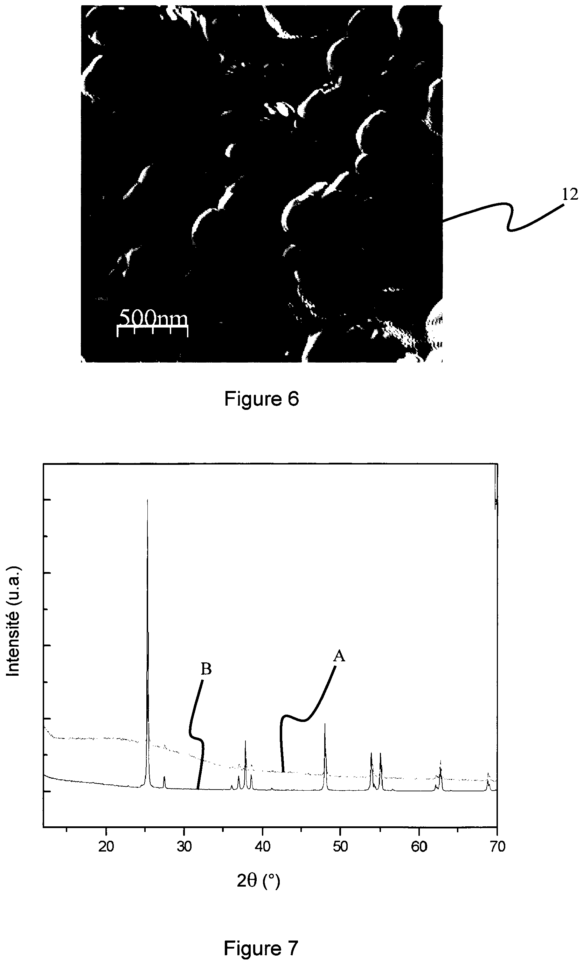

Comme représenté aux figures 5 et 6, on visualise la topographie des première et seconde faces principales, respectivement 11 et 12, de la seconde électrode 3 en matériau composite TiO₂/LiNO₃ décrit ci-dessus par AFM en mode modulation d'amplitude dit "tapping". Les images obtenues montrent une différence de morphologie entre les première et seconde faces principales, respectivement 11 et 12, de la seconde électrode 3 en matériau composite TiO₂/LiNO₃. La première face principale 11 (figure 5) a une morphologie granuleuse indiquant la présence de TiO₂ alors que la seconde face principale 12 (figure 6) montre des grains enrobés dans une matrice de LiNO₃.

Comme représenté à la figure 1, la première face principale 11 de la seconde électrode 3 en matériau composite TiO₂/LiNO₃ est destinée à être en contact avec le second collecteur de courant 6 de l'accumulateur au lithium tout solide et la seconde face principale 12, est destinée à être en contact avec l'électrolyte solide 4.

Comme représenté à la figure 7, le diagramme de diffraction des rayons X de la seconde électrode 3 en matériau composite TiO₂/LiNO₃ (courbe A) comparativement au diagramme de diffraction des rayons X du TiO₂ commercial (courbe B) indique la présence d'une phase unique en TiO₂. La bosse observée au début du diagramme de la seconde électrode 3 en matériau composite TiO₂/LiNO₃ (courbe A) indique la présence d'une phase amorphe correspondant au matériau amorphe 8 de LiNO₃, formant la matrice vitreuse.

L'accumulateur au lithium tout solide selon l'invention est particulièrement adapté à une utilisation à haute température et/ou haute pression.

L'accumulateur au lithium tout solide selon l'invention est remarquable en ce qu'il comprend une seconde électrode inerte vis-à-vis de l'électrolyte solide à haute température et/ou haute pression, en particulier, par rapport à un électrolyte solide en céramique ou vitrocéramique.

En outre, contrairement aux accumulateurs au lithium de l'art antérieur, l'accumulateur au lithium tout solide comportant une électrode selon l'invention présente de bonnes performances électrochimiques à haute température et/ou haute pression et permet d'atteindre ainsi des tensions de fonctionnement de 2V à 5V.

## Revendications

1. Accumulateur au lithium tout solide comportant des première et seconde électrodes (2, 3) séparées par un électrolyte solide (4) **caractérisé en ce que** la seconde électrode (3) est formée par un matériau composite comportant :
- un matériau électrochimiquement actif (7) en matériau d'insertion de l'ion lithium,
- et un matériau amorphe (8) à base de lithium, conducteur ionique des ions lithium et inerte par rapport au matériau électrochimiquement actif (7), ledit matériau amorphe (8) ayant une température de fusion inférieure à la température de fusion du matériau électrochimiquement actif (7).

2. Accumulateur au lithium selon la revendication 1, **caractérisé en ce que** le matériau amorphe (8) à base de lithium est choisi parmi les halogénures de lithium, les hydrures de lithium, les hydroxydes de lithium, les phosphate de lithium, les borates de lithium, les nitrates de lithium, les sulfates de lithium, les vanadates de lithium, les oxydes de lithium et les oxydes mixtes de lithium.

3. Accumulateur au lithium selon l'une des revendications 1 et 2, **caractérisé en ce que** le matériau amorphe (8) à base de lithium comporte au moins un composé au lithium et au moins un composé additionnel.

4. Accumulateur au lithium selon la revendication 3, **caractérisé en ce que** le composé additionnel est un sel d'halogénure.

5. Accumulateur au lithium selon l'une quelconque des revendications 1 à 4, **caractérisé en ce que** l'électrode (3) a une première face principale (11) et une seconde face principale (12) et **en ce qu'**elle présente un gradient en concentration de matériau amorphe (8) croissant entre la première face principale (11) et la seconde face principale (12).

6. Accumulateur au lithium selon l'une quelconque des revendications 1 à 5, **caractérisé en ce que** le matériau composite est sous forme de grains en matériau électrochimiquement actif (7) enrobés par le matériau amorphe (8).

7. Accumulateur au lithium selon l'une quelconque des revendications 1 à 6, **caractérisé en ce que** l'électrolyte solide (4) est choisi parmi les céramiques et les vitrocéramiques.

8. Procédé de fabrication d'un accumulateur au lithium selon l'une quelconque des revendications 1 à 7, comprenant la réalisation de la seconde électrode **caractérisé en ce que** ladite étape de réalisation de la seconde électrode comporte les étapes successives suivantes :
- formation d'un mélange de poudres (10) comportant le matériau électrochimiquement actif (7) et un composé précurseur (9) du matériau amorphe (8), ledit composé précurseur (9) étant un conducteur ionique des ions lithium, inerte par rapport audit matériau électrochimiquement actif (7) et ayant une température de fusion inférieure à la température de fusion du matériau électrochimiquement actif (7),
- traitement thermique dudit mélange de poudres (10) à une température de traitement thermique inférieure à la température de fusion du matériau électrochimiquement actif (7) et supérieure à la température de fusion du composé précurseur (9) et,
- refroidissement par trempe.

9. Procédé selon la revendication 8, **caractérisé en ce que** la trempe est réalisée à une température inférieure ou égale à la température ambiante.

10. Procédé selon l'une des revendications 8 et 9, **caractérisé en ce que** le composé précurseur (9) comporte au moins un composé au lithium choisi parmi les halogénures de lithium, les hydrures de lithium, les hydroxydes de lithium, les phosphate de lithium, les borates de lithium, les nitrates de lithium, les sulfates de lithium, les vanadates de lithium, les oxydes de lithium et les oxydes mixtes de lithium.

11. Procédé selon l'une quelconque des revendications 8 à 10, **caractérisé en ce que** le composé précurseur (9) comporte au moins un composé au lithium et au moins un composé additionnel choisi parmi les sels d'halogénure.

12. Procédé selon l'une quelconque des revendications 8 à 11, **caractérisé en ce que** le rapport matériau électrochimiquement actif (7) / composé précurseur (9), en pourcentage volumique, dans le mélange de poudres (10), varie entre 99/1 et 20/80.

## Patentansprüche

1. Festkörper-(All-Solid-State)-Lithiumbatterie, die eine erste und eine zweite Elektrode (2, 3) umfasst, die durch einen Festkörperelektrolyt (4) getrennt sind, **dadurch gekennzeichnet, dass** die zweite Elektrode (3) aus einem Verbundmaterial hergestellt ist, das Folgendes umfasst:
- ein elektrochemisch aktives Material (7) aus Insertionsmaterial des Lithiumions,
- und ein amorphes Material (8) auf Lithiumbasis, Ionenleiter der Lithiumionen und bezüglich des elektrochemisch aktiven Materials (7) inert, wobei das amorphe Material (8) eine Schmelztemperatur hat, die niedriger ist als die Schmelztemperatur des elektrochemisch aktiven Materials (7).

2. Lithiumbatterie nach Anspruch 1, **dadurch gekennzeichnet, dass** das amorphe Material (8) auf Lithiumbasis aus den Lithiumhalogeniden, den Lithiumhydriden, den Lithiumhydroxiden, den Lithiumphosphaten, den Lithiumboraten, den Lithiumnitraten, den Lithiumsulfaten, den Lithiumvanadaten, den Lithiumoxiden und den Lithiummischoxiden ausgewählt ist.

3. Lithiumbatterie nach einem der Ansprüche 1 und 2, **dadurch gekennzeichnet, dass** das amorphe Material (8) auf Lithiumbasis mindestens eine Lithiumverbindung und mindestens eine zusätzliche Verbindung umfasst.

4. Lithiumbatterie nach Anspruch 3, **dadurch gekennzeichnet, dass** die zusätzliche Verbindung ein Halogenidsalz ist.

5. Lithiumbatterie nach einem der Ansprüche 1 bis 4, **dadurch gekennzeichnet, dass** die Elektrode (3) eine erste Hauptfläche (11) und eine zweite Hauptfläche (12) aufweist, und dass sie einen Konzentrationsgradienten an amorphem Material (8) aufweist, der zwischen der ersten Hauptfläche (11) und der zweiten Hauptfläche (12) ansteigt.

6. Lithiumbatterie nach einem der Ansprüche 1 bis 5, **dadurch gekennzeichnet, dass** das Verbundmaterial die Form von Körnern aus elektrochemisch aktivem Material (7), die mit dem amorphen Material (8) beschichtet sind, aufweist.

7. Lithiumbatterie nach einem der Ansprüche 1 bis 6, **dadurch gekennzeichnet, dass** der Festkörperelektrolyt (4) aus den Keramiken und Glaskeramiken ausgewählt ist.

8. Herstellungsverfahren einer Lithiumbatterie nach einem der Ansprüche 1 bis 7, das das Herstellen der zweiten Elektrode umfasst, **dadurch gekennzeichnet, dass** der Herstellungsschritt der zweiten Elektrode die folgenden sukzessiven Schritte umfasst:
- Bilden eines Gemisches von Pulvern (10), das das elektrochemisch aktive (7) Material und einer Vorläuferverbindung (9) des amorphen Materials (8) umfasst, wobei das Vorläufermaterial (9) ein Ionenleiter der Lithiumionen ist, der bezüglich des elektrochemisch aktiven Materials (7) inert ist und eine Schmelztemperatur hat, die niedriger ist als die Schmelztemperatur des elektrochemisch aktiven Materials (7),
- Wärmebehandlung des Gemischs von Pulvern (10) bei einer Wärmebehandlungstemperatur, die niedriger ist als die Schmelztemperatur des elektrochemisch aktiven Materials (7) und höher ist als die Schmelztemperatur der Vorläuferverbindung (9), und
- Kühlen durch Abschrecken.

9. Verfahren nach Anspruch 8, **dadurch gekennzeichnet, dass** das Abschrecken bei einer Temperatur erfolgt, die niedriger oder gleich ist wie die Umgebungstemperatur.

10. Verfahren nach einem der Ansprüche 8 bis 9, **dadurch gekennzeichnet, dass** die Vorläuferverbindung (9) mindestens eine Lithiumverbindung umfasst, die aus den Lithiumhalogeniden, den Lithiumhydriden, den Lithiumhydroxiden, den Lithiumphosphaten, den Lithiumboraten, den Lithiumnitraten, den Lithiumsulfaten, den Lithiumvanadaten, den Lithiumoxiden und den Lithiummischoxiden ausgewählt ist.

11. Verfahren nach einem der Ansprüche 8 bis 10, **dadurch gekennzeichnet, dass** die Vorläuferverbindung (9) mindestens eine Lithiumverbindung und mindestens eine zusätzliche Verbindung, die aus den Halogenidsalzen ausgewählt ist, umfasst.

12. Verfahren nach einem der Ansprüche 8 bis 11, **dadurch gekennzeichnet, dass** das Verhältnis zwischen elektrochemisch aktivem Material (7) und Vorläuferverbindung (9) in Volumenprozent in dem Gemisch von Pulvern (10) zwischen 99 zu 1 und 20 zu 80 variiert.

## Claims

1. All-solid-state lithium battery comprising first and second electrodes (2, 3) separated by a solid electrolyte (4), **characterized in that** the second electrode (3) is formed by a composite material comprising:
- an electrochemically active material (7) made of an insertion material for the lithium ion,
- and a lithium-based amorphous material (8), which is an ionic conductor for the lithium ions and which is inert with respect to the electrochemically active material (7) said amorphous material (8) having a melting point lower than the melting point of the electrochemically active material (7).

2. Lithium battery according to claim 1, **characterized in that** the lithium-based amorphous material (8) is selected among lithium halides, lithium hydrides, lithium hydroxides, lithium phosphates, lithium borates, lithium nitrates, lithium sulfates, lithium vanadates, lithium oxides and mixed lithium oxides.

3. Lithium battery according to one of claims 1 and 2, **characterized in that** the lithium-based amorphous material (8) comprises at least one lithium compound and at least one additional compound.

4. Lithium battery according to claim 3, **characterized in that** the additional compound is a halide salt.

5. Lithium battery according to anyone of the claims 1 to 4, **characterized in that** the electrode (3) has a first main face (11) and a second main face (12) and **in that** it presents an increasing concentration gradient of the amorphous material (8) between the first main face (11) and the second main face (12).

6. Lithium battery according to anyone of the claims 1 to 5, **characterized in that** the composite material is in the form of grains made of electrochemically active material (7) coated with the amorphous material (8).

7. Lithium battery according to anyone of the claims 1 to 6, **characterized in that** the solid electrolyte (4) is selected among ceramics and glass-ceramics.

8. Method for producing a lithium battery according to anyone of the claims 1 to 7, comprising the making of the second electrode, **characterized in that** said step of making the second electrode comprises the following successive steps of:
- forming a mixture of powders (10) comprising the electrochemically active material (7) and a precursor compound (9) for the amorphous material (8), said precursor compound (9) being an ionic conductor of the lithium ions, inert with respect to said electrochemically active material (7) and having a melting point lower than the melting point of the electrochemically active material (7),
- thermally treating said mixture of powders (10) at a thermal treatment temperature lower than the melting point of the electrochemically active material (7) and higher than the melting point of the precursor compound (9) and,
- cooling by a hardening process.

9. Method according to claim 8, **characterized in that** the hardening process is carried out at a temperature lower than or equal to the ambient temperature.

10. Method according to anyone of the claims 8 and 9, **characterized in that** the precursor compound (9) comprises at least one lithium compound chosen among lithium halides, lithium hydrides, lithium hydroxides, lithium phosphates, lithium borates, lithium nitrates, lithium sulfates, lithium vanadates, lithium oxides and mixed lithium oxides.

11. Method according to anyone of the claims 8 to 10, **characterized in that** the precursor compound (9) comprises at least one lithium compound and at least one additional compound selected among halide salts.

12. Method according to anyone of the claims 8 to 11, **characterized in that** the electrochemically active material (7)/precursor compound (9) ratio in the mixture of powders (10) varies between 99/1 and 20/80 in volume percentage.
